# EUROPÄISCHE PATENTSCHRIFT

(11) **EP 1 837 646 B1**
(45) Veröffentlichungstag und Bekanntmachung des Hinweises auf die Patenterteilung: **30.09.2009**
(21) Anmeldenummer: 06005684.3
(22) Anmeldetag: 20.03.2006
(51) Int. Cl.: G01N 25/68

(54) **Verfahren und Vorrichtung zur Ermittlung der Feuchte eines Gases**
Method and device for determining the humidity of a gas
Procédure et dispositif pour déterminer l'humidité d'un gaz

(43) Veröffentlichungstag der Anmeldung: 26.09.2007
(73) Patentinhaber: Vereta GmbH, 37574 Einbeck (DE)
(72) Erfinder: Rengshausen, Detlef, 37586 Dassel/Amelsen (DE)
(74) Vertreter: Eisenführ, Speiser & Partner

(56) Entgegenhaltungen:
- DD-A1- 124 444
- DE-A1- 10 113 190
- US-A- 3 396 574
- US-A1- 2005 152 431

## Beschreibung

Die Erfindung betrifft ein Verfahren und eine Vorrichtung zur Ermittlung der Feuchte eines Gases an einem Messpunkt.

Im Stand der Technik sind Verfahren und Vorrichtungen zur Ermittlung der Feuchte eines Gases bekannt, welche auf Taupunktmessungen basieren.

Eine herkömmliche Methode zur Messung des Taupunktes besteht darin, eine geeignete Fläche bis zur Bildung von Tau abzukühlen, den Moment der Taubildung zu erfassen und dann die Temperatur zum Zeitpunkt zu messen, zu welchem der erstmalige Tauniederschlag festgestellt wurde. Herkömmlicherweise ist die bei der Taumessung verwendete Fläche eine Spiegelfläche, wodurch der Tau auf optische Weise ermittelt wird, indem die Abschwächung des von der Spiegelfläche reflektierten Lichtes erfasst wird.

Alternativ zum optischen Verfahren gibt es auch kapazitive Verfahren oder Verfahren, die auf der Messung der Abschwächung einer Oberflächenschallwelle basieren, die entlang der Tauoberfläche erzeugt wird, wobei die Tauoberfläche einen Teil eines elektrischen Messkreises bildet.

In der DE 195 13 274 A1 sind ein Verfahren zur Messung des Taupunktes und eine Vorrichtung zur Vorhersage einer Vereisung angegeben, wobei ein Messverfahren zur Taupunktmessung der zuvor beschriebenen Art zum Anwendung kommt.

Ferner wird in der EP 0 768 527 A1 vorgeschlagen, Feuchtigkeitsmesswerte aus dem Antwortverhalten einer thermische Änderung einer Polymerschicht bzw. kondensierten Oberfläche auf die Taupunktwerte zu ermitteln.

Mit den zuvor beschriebenen herkömmlichen Verfahren und Vorrichtungen erhält man eine direkte Anzeige der Taupunkttemperatur. Die erzielbare Genauigkeit wird dabei durch die Genauigkeit der Taupunkterfassung und der Messung der Oberflächentemperatur bestimmt.

Die zuvor beschriebenen herkömmlichen Verfahren und Vorrichtung weisen verschiedene Nachteile auf. So werden durch die Verschmutzung der Taupunktmessfläche Fehler verursacht, auch wenn Gegenmaßnahmen gegen die Verschmutzung vorgesehen sind, indem die Messung zyklisch erfolgt oder die Tauoberfläche automatisch gereinigt wird. Ungeachtet solcher Gegenmaßnahmen ist die Verwendbarkeit derartiger Vorrichtungen durch die kurzen Wartungsintervalle verkürzt, die unter Prozessbedingungen notwendig sind.

Im Stand der Technik sind auch Verfahren und Vorrichtungen zur indirekten Messung auf der Basis der relativen Feuchtigkeit und der Temperatur, die der gemessenen relativen Feuchtigkeit entspricht, bekannt. Diese Messverfahren bieten im Vergleich zu den zuvor beschriebenen Messverfahren Vorteile wie schnelle Antwortzeiten, verringerte Neigung zu Verschmutzungen und die Anwendbarkeit auch bei höheren Temperaturen. Nachteilig an diesen indirekten Verfahren sind jedoch deren relativ große Messfehler insbesondere in niedrigen Bereichen der relativen Feuchtigkeit.

Aus dem Dokument DE 10 113 190 A1 ist ein nach dem Taupunktprinzip arbeitender Feuchtesensor bekannt bei dem
- die Umgebungstemperatur gemessen wird,
- die gesamte Sensormembran ununterbrochen gekühlt wird, so dass die Temperatur der Membran gegenüber der Umgebungstemperatur sinkt,
- dabei die Temperatur der Membran gemessen wird und
- nach Feststellung, dass bei fortgesetzter Kühlung die Temperatur der Membran im wesentlichen nicht weiter sinkt, aus der dann an der Membran gemessenen Temperatur unter Berücksichtigung der gemessenen Umgebungstemperatur die Feuchte ermittelt wird.

Es ist Aufgabe der vorliegenden Erfindung, zur Ermittlung der Feuchte eines Gases ein neues Verfahren vorzuschlagen, welches eine direkte Ermittlung der Feuchte erlaubt, sich einfach durchführen lässt und eine relativ hohe Messgenauigkeit bietet. Ferner ist es Aufgabe der vorliegenden Erfindung, eine Vorrichtung zur Durchführung eines solchen Verfahrens zu schaffen, welche sich durch eine relativ einfache Konstruktion auszeichnet.

Zur Lösung dieser Aufgabe wird gemäß einem ersten Aspekt der vorliegenden Erfindung ein Verfahren zur Ermittlung der Feuchte eines Gases an einem Messpunkt mit den Schritten vorgeschlagen, die Umgebungstemperatur zu messen, den Messpunkt zu kühlen, so dass die Temperatur am Messpunkt gegenüber der Umgebungstemperatur sinkt, dabei die Temperatur am Messpunkt zu messen und nach Feststellung, dass bei fortgesetzter Kühlung die Temperatur am Messpunkt im wesentlichen nicht weiter sinkt, aus der dann am Messpunkt gemessenen Temperatur unter Berücksichtigung der gemessenen Umgebungstemperatur die Feuchte zu ermitteln.

Gemäß einem weiteren Aspekt der vorliegenden Erfindung wird eine Vorrichtung zur Ermittlung der Feuchte eines Gases an einem Messpunkt vorgeschlagen, gekennzeichnet durch eine Umgebungstemperaturmesseinrichtung zur Messung der Umgebungstemperatur, eine Kühleinrichtung zur Kühlung des Messpunktes, so dass die Temperatur am Messpunkt gegenüber der Umgebungstemperatur sinkt, eine Messpunkttemperaturmesseinrichtung zur Messung der Temperatur am Messpunkt und eine an die Kühleinrichtung, die Umgebungstemperaturmesseinrichtung und die Messerpunkttemperaturmesseinrichtung angeschlossene Auswerteeinrichtung, welche nach Feststellung, dass bei fortgesetzter Kühlung die Temperatur am Messpunkt im wesentlichen nicht weiter sinkt, aus der dann am Messpunkt gemessenen Temperatur unter Berücksichtung der gemessenen Umgebungstemperatur die Feuchte ermittelt.

Die Erfindung macht sich die Erkenntnis zu Nutze, dass die ursprünglich für die Kühlung verwendete Energie nach der Entstehung von Tau für die Kondensation und Aufrechterhaltung der Taubildung benötigt wird, was zur Folge hat, dass dann trotz fortgesetzter Energiezufuhr die Temperatur am Ort der Taubildung im wesentlichen nicht weiter sinkt. Es wird der Eintritt dieses Phänomens durch einfache Temperaturmessung am Taupunkt ermittelt, wenn mit Hilfe der Temperaturmessung festgestellt wird, dass nach vorausgegangener Kühlung nunmehr ein weiteres Absinken der Temperatur im wesentlichen nicht mehr zu beobachten ist, sondern der Temperaturwert im wesentlichen ein Minimum erreicht hat. Dieser Zeitpunkt wird dazu genutzt, aufgrund der erreichten und im wesentlichen nicht weiter absinkenden Temperatur unter Berücksichtigung der Umgebungstemperatur die Feuchte zu ermitteln. Denn bei bekannter Umgebungstemperatur ist die erreichbare Tiefe der Temperatur im wesentlichen proportional zur Feuchte im Gas.

Demnach wird ein Messpunkt mit Gas in direkten Kontakt gebracht und gekühlt, bis trotz fortgesetzter Kühlung die Temperatur am Messpunkt im wesentlichen nicht weiter sinkt. Hierzu wird die Temperatur am Messpunkt gemessen. Ergibt diese Temperaturmessung, dass die Temperatur am Messpunkt ihr Minimum erreicht hat und im wesentlichen nicht weiter sinkt, wird aufgrund dieses gemessenen Temperaturwertes die Feuchte unter Berücksichtigung der Umgebungstemperatur ermittelt, die ebenfalls gemessen wird.

Somit wird ein Verfahren zur Ermittlung der Feuchte eines Gases vorgeschlagen, welches eine direkte Ermittlung der Feuchte erlaubt und sich einfach durchführen lässt. Dies ermöglicht eine relativ hohe Messgenauigkeit und ist auch besonders robust gegen Verschmutzungen, da diese auf die Messung keinen Einfluss haben.

Da für die Durchführung des Verfahrens lediglich eine Umgebungstemperaturmesseinrichtung, eine Messpunkttemperaturmesseinrichtung, eine Kühleinrichtung zur Kühlung des Messpunktes sowie eine entsprechende Auswerteeinrichtung vor Nöten sind, bedingt die Erfindung ferner eine relativ einfache Konstruktion für eine Vorrichtung zur Ermittlung der Feuchte.

Ein wichtiges Anwendungsgebiet für das Verfahren und die Vorrichtung dürfte die Ermittlung der Feuchte in der Luft darstellen.

Nach Feststellung, dass bei fortgesetzter Kühlung die Temperatur am Messpunkt im wesentlichen nicht weiter sinkt, wird erfindungsgemäß mit Hilfe einer Steuereinrichtung die Kühlung des Messpunktes heruntergeregelt oder unterbrochen.

Zur vorteilhaften Ableitung der Wärme sollte die Kühleinrichtung mindestes einen am Messpunkt angeordneten Kühlabschnitt und mindestens einen vom Messpunkt entfernten Wärmeableitungsabschnitt aufweisen. Eine solche Kühleinrichtung ist gewöhnlich nach Art eines Peltier-Elementes aufgebaut.

Vorzugsweise ist in der Auswerteeinrichtung eine Tabelle abgespeichert, in der die Feuchtigkeitswerte in Abhängigkeit von Umgebungstemperatur und Temperatur am Messpunkt angegeben sind, so dass auf einfache und schnelle Weise aus den gemessenen Werten für die Umgebungstemperatur und die Temperatur am Messpunkt der augenblickliche Wert für die tatsächlich im Gas herrschende Feuchte ermittelt werden kann.

Eine weitere bevorzugte Ausführung der Erfindung zeichnet sich dadurch aus, dass die Kühleinrichtung, die Umgebungstemperaturmesseinrichtung und die Messpunkttemperaturmesseinrichtung gemeinsam auf einem Substrat angeordnet und/oder in einem Chip integriert sind. Dies ergibt eine besonders kompakte Bauform zur Bildung eines Feuchtigkeitssensors. Zusätzlich ist es aber selbstverständlich auch denkbar, ebenfalls die Auswerteeinrichtung auf dem Substrat oder in dem Chip unterzubringen.

Nachfolgend wird ein bevorzugtes Ausführungsbeispiel der Erfindung anhand der beiliegenden Zeichnungen näher erläutert. Es zeigen:
- Figur 1: eine schematische Draufsicht auf einen Feuchtesensor in einer bevorzugten Ausführung; und
- Figur 2: ein schematisches Blockschaltbild einer Schaltung, in der der Feuchtesensor von Figur 1 an eine Auswerteeinrichtung angeschlossen ist.

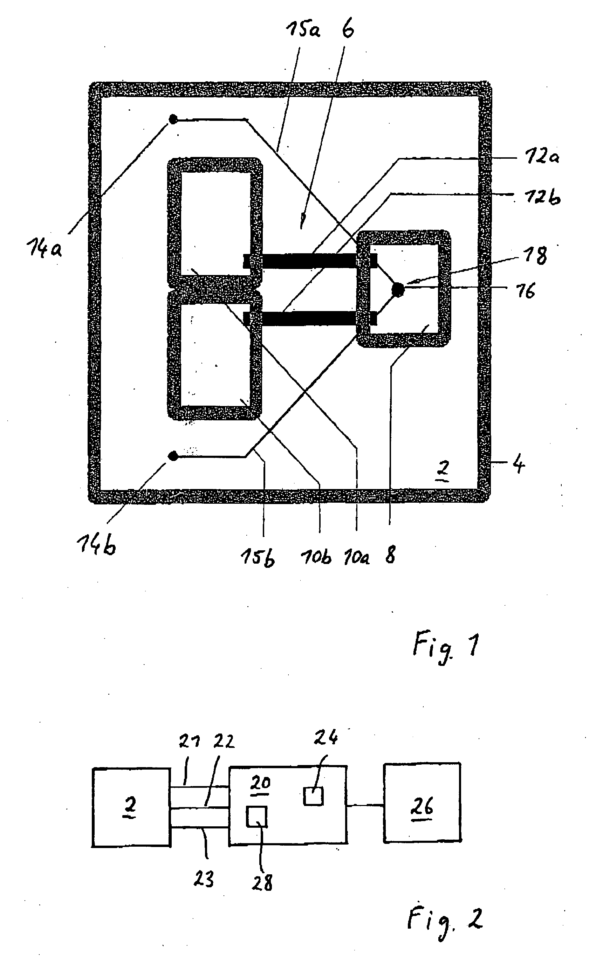

In Figur 1 ist schematisch in Draufsicht ein Feuchtesensor 2 dargestellt, der ein Substrat 4 aufweist, auf dem ein Kühl-Heiz-Element 6 angeordnet ist.

Das Kühl-Heiz-Element 6 ist im dargestellten Ausführungsbeispiel als Peltier-Element ausgebildet. Beim Peltier-Element handelt es sich um ein thermoelektrisches Element, das als Wärmepumpe arbeitet und deshalb zum Kühlen und Heizen verwendet werden kann. Dabei fließt Gleichstrom durch ein thermoelektrisches Element, wodurch Wärme von einer Seite des Elementes zur anderen Seite transportiert wird. Als Ergebnis wird die eine Seite kalt und die gegenüberliegende Seite warm. Im dargestellten Ausführungsbeispiel wird die kalte Seite von einem Kühlabschnitt 8 und die warme Seite von zwei Wärmeableitungsabschnitten 10a und 10b gebildet. Jeder der Wärmeableitungsabschnitte 10a und 10b ist mit dem Kühlabschnitt 8 über eine elektrische Leitung 12a bzw. 12b verbunden, durch den Strom fließt, der die Wärme vom Kühlabschnitt 8 zu den Wärmeableitungsabschnitten 10a, 10b transportiert. Dieser Wärmetransport wird also durch Elektronenfluss bewirkt. Für ein Peltier-Element sind Materialien günstig, die eine hohe elektrische Leitfähigkeit und eine niedrige Leitfähigkeit für Wärme haben. Da die meisten elektrischen Leiter auch eine hohe Leitfähigkeit besitzen, sollte für die Verbindungsleitungen 12a, 12b dotierte Halbleiter gewählt werden, um einen guten Wirkungsgrad zu erzielen.

Wie ferner Figur 1 erkennen lässt, sind auf dem Substrat 4 im dargestellten Ausführungsbeispiel zwei Umgebungstemperaturmessstellen 14a, 14b vorgesehen, die außerhalb des Kühl-Heiz-Element 6 liegen. Ferner ist im Bereich des Kühlabschnittes 8 eine Messpunkttemperaturmessstelle 16 vorgesehen, deren Ort ein Messpunkt 18 bildet.

Im dargestellten Ausführungsbeispiel sind die beiden Umgebungstemperaturmessstellen 14a, 14b jeweils über einen elektrischen Leiter 15a bzw. 15b mit der Messpunkttemperaturmessstelle 16 verbunden, wobei die elektrischen Leiter 15 aus unterschiedlich elektrisch leitenden Materialien bestehen. Hiernach wird im dargestellten Ausführungsbeispiel ein Thermoelement verwendet, dessen freie Enden die Umgebungstemperaturmessstellen 14a, 14b bilden und dessen Verbindungspunkt die Messtemperaturmessstelle 16 bildet. Selbstverständlich sind aber auch andere Konfigurationen zur Temperaturmessung denkbar, und es reicht grundsätzlich auch aus, nur eine einzige Umgebungstemperaturmessstelle vorzusehen.

Damit die Umgebungstemperaturmessstellen 14a, 14b sowohl vom Kühlabschnitt 8 als auch von den Wärmeableitungsebschnitten 10a und 10b des Kühl-Heiz-Elementes 6 nicht beeinflusst werden, müssen diese in ausreichendem Abstand vom Kühl-Heiz-Element 6 angeordnet sein, wie Figur 1 erkennen lässt.

In Figur 2 ist die gesamte Messanordnung schematisch im Blockschaltbild dargestellt. An den Feuchtesensor 2 von Figur 1 ist eine Auswerteeinrichtung 20 angeschlossen, und zwar insbesondere über eine erste Anschlussleitung 21, die zur Messung der Umgebungstemperatur mit den Umgebungstemperaturmessstellen 14a, 14b verbunden ist, über eine zweite Anschlussleitung 22, die zur Messung der Temperatur am Messpunkt 18 mit der Messpunkttemperaturmessstelle 16 verbunden ist, und eine dritte Anschlussleitung 23, die an das Kühl-Heiz-Element 6 angeschlossen ist, um dieses mit der notwendigen Energie zu versorgen. Die Auswerteeinrichtung 20 weist gewöhnlich eine mikroprozessorbasierte Elektronik auf, die unter anderen einen Speicher 24 enthält. In diesem Speicher 24 ist eine Tabelle abgespeichert, die nachfolgend noch im einzelnen noch erläutert wird. An die Auswerteeinrichtung 20 ist im dargestellten Ausführungsbeispiel ein Ausgabegerät 26 angeschlossen, um den ermittelten Wert der Feuchte anzeigen und/oder ausgeben zu können. Gewöhnlich weist das Ausgabegerät 26 eine entsprechende Anzeige auf. Zusätzlich oder alternativ kann im Ausgabegerät 26 auch eine Schnittstelle für den Anschluss beispielsweise eines Druckers vorgesehen sein. Schließlich weist die Auswerteeinrichtung 20 noch ein Steuermodul 28 auf, um die Energiezufuhr zum Kühl-Heiz-Element 6 und somit dessen Kühlleistung steuern und regeln zu können. Dieses Steuermodul 28 kann hardwaremäßig und/oder softwaremäßig ausgeführt sein.

Der Messpunkt 18 auf dem Substrat 4 des Feuchtesensors 2 ist so ausgebildet, dass er mit dem zu messenden Gas in direkten Kontakt gelangt. Ferner müssen die Umgebungstemperaturmessstellen 14a und 14b auf dem Substrat 4 des Feuchtesensors 2 so ausgeführt sein, dass sie die am Feuchtesensor 2 herrschende Umgebungstemperatur ohne Behinderung messen können.

Zur Ermittlung der Feuchte wird der Messpunkt 18 mit Hilfe des Kühlabschnittes 8 des Kühl-Heiz-Elementes 6 gekühlt, so dass die Temperatur am Messpunkt 18 gegenüber der Umgebungstemperatur sinkt. Dabei wird die Temperatur am Messpunkt 18 mit Hilfe der Messpunkttemperaturmessstelle 16 gemessen. Ferner wird die Umgebungstemperatur mit Hilfe der Umgebungstemperaturmessstellen 14a, 14b gemessen.

Die Messung der Umgebungstemperatur durch die Umgebungstemperaturmessstellen 14a, 14b und die Messung des vom Kühlabschnitt 8 gekühlten Messpunktes 18 durch die Messpunkttemperaturmessstelle 16 wird in der Auswerteeinrichtung 20 laufend überwacht. Während des Kühlvorganges durch Energiezufuhr zum Kühl-Heiz-Element 6 wird die Wärme in der zuvor beschriebenen Weise vom Kühlabschnitt 8 zu den Wärmeableitungsabschnitten 10a, 10b transportiert, um dort dann an die Umgebung freigesetzt zu werden. Dabei ist der Abstand der Wärmeableitungsabschnitte 10a, 10b vom Kühlabschnitt 8 und somit auch von der Messpunkttemperaturmessstelle 16 und dem Messpunkt 18 so gewählt, dass die freigesetzte Wärme die Kühlung des Messpunktes 18 und die Messung der dort herrschenden Temperatur nicht beeinflusst.

Wird nun in der Auswerteeinrichtung 20 festgestellt, dass trotz fortgesetzter Energiezufuhr zum Kühl-Heiz-Element 6 die Temperatur am Messpunkt 18 im wesentlichen nicht weiter sinkt, sondern ein Minimum erreicht hat, ermittelt die Auswerteeinrichtung 20 aus der dann am Messpunkt 18 herrschenden Temperatur unter Berücksichtigung der von den Umgebungstemperaturmessstellen 14a, 14b gemessenen Umgebungstemperatur die Feuchte. Hierbei kommt die in der Auswerteeinrichtung 20 enthaltene Tabelle 24 zur Anwendung, in der die Feuchtigkeitswerte in Abhängigkeit von Umgebungstemperatur und Temperatur am Messpunkt 18 abgespeichert sind. Somit ergibt sich aus der Tabelle der augenblicklich herrschende Wert für die Feuchtigkeit in Abhängigkeit von der gemessenen Umgebungstemperatur und der am Messpunkt 18 gemessenen Temperatur.

Für ein solches Verfahren wird die Erkenntnis genutzt, dass die ursprünglich für die Kühlung verwendete Energie, die dem Kühl-Heiz-Element 6 zugeführt wird, nach der Entstehung von Tau am Messpunkt 18 für die Kondensation und Aufrechterhaltung der Taubildung benötigt wird, was zur Folge hat, dass dann trotz fortgesetzter Energiezufuhr die Temperatur am Messpunkt 18 im wesentlichen nicht weiter sinkt, sondern ihr Minimum erreicht hat. Dieser Zeitpunkt wird nun dazu genutzt, aufgrund der erreichten und im wesentlichen nicht weiter absinkenden Temperatur unter Berücksichtigung der Umgebungstemperatur die Feuchte zu ermitteln. Denn bei bekannter Umgebungstemperatur ist die erreichbare Tiefe der Temperatur proportional zur Feuchte im Gas.

Das in der Auswerteeinrichtung 20 enthaltene Steuermodul 28 dient zur Steuerung und Regelung der Kühlleistung des Kühl-Heiz-Elementes 6. Nach Feststellung, dass trotz fortgesetzter Energiezufuhr die Temperatur am Messpunkt 18 im wesentlichen nicht weiter sinkt, wird erfindungsgemäß das Steuermodul 28 bei Bedarf die Energiezufuhr zum Kühl-Heiz-Element 6 herunterregeln oder vollständig unterbrechen.

## Patentansprüche

1. Vorrichtung zur Ermittlung der Feuchte eines Gases an einem Messpunkt (18), mit
- einer Umgebungstemperaturmesseinrichtung (14a, 14b) zur Messung der Umgebungstemperatur,
- einer Kühleinrichtung (6) zur Kühlung des Messpunktes (18), so dass die Temperatur am Messpunkt (18) gegenüber der Umgebungstemperatur sinkt,
- einer Messpunkttemperaturmesseinrichtung (16) zur Messung der Temperatur am Messpunkt (18), wobei die Messpunkttemperaturmesseinnchtung (16) eine Messpunkttemperaturmessstelle (16) aufweist,
- einem Substrat (4), auf dessen einer Oberfläche gemeinsam der Messpunkt (18), die Kühleinrichtung (6) und die Messpunkttemperaturmesseinrichtung (16) angeordnet sind,
- einer an die Kühleinrichtung (6), die Umgebungstemperaturmesseinrichtung (14a, 14b) und die Messpunkttemperaturmesseinrictung (16) angeschlossene Auswerteeinrichtung (20), eingerichtet um nach Feststellung, dass bei fortgesetzter Kühlung die Temperatur am Messpunkt (18) im wesentlichen nicht weiter sinkt, aus der dann am Messpunkt (18) gemessenen Temperatur unter Berücksichtung der gemessenen Umgebungstemperatur die Feuchte zu ermitteln, und
- **gekennzeichnet durch** eine Steuereinrichtung (28) eingerichtet um nach Feststellung, dass bei fortgesetzter Kühlung die Temperatur am Messpunkt (18) im wesentlichen nicht weiter sinkt, die Kühleinrichtung (6) herunterzuregeln oder abzuchallen.

2. Vorrichtung nach Anspruch 1,
**dadurch gekennzeichnet, dass** die Kühleinrichtung (6) mindestens einen am Messpunkt (18) angeordneten Kühlabschnitt (8) und mindestens einen vom Messpunkt (18) entfernten Wärmeableitungsabschnitt (10a, 10b) aufweist.

3. Vorrichtung nach Anspruch 2,
**dadurch kennzeichnet, dass** die Kühleinrichtung (6) mindestens Peltier-Element aufweist.

4. Vorrichtung nach mindestens einem der vorangegangenen Ansprüche,
**dadurch gekennzeichnet, dass** in der Auswerteeinrichtung (20) eine Tabelle (24) abgespeichert ist, in der die Feuchtigkeitswerte in Abhängigkeit von Umgebungstemperatur und temperatur am Messpunkt (18) angegeben sind.

5. Vorrichtung nach mindestens einem der vorangegangenen Ansprüche,
**dadurch gekennzeichnet, dass** die Umgebungstemperaturmesseinrichtung (14a, 14b) auf derselben Oberfläche des Substrates (4) wie der Messpunkt (18), die Kühleinrichtung (6) und die Messpunkttemperaturmesseinrichtung (16) angeordnet ist.

6. Vorrichtung nach mindestens einem der vorangegangenen Ansprüche,
**dadurch gekennzeichnet, dass** das Substrat (4) Teil eines Chip ist oder als Chip ausgebildet ist.

7. Verfahren zur Ermittlung der Feuchte eines Gases an einem Messpunkt (18) mit Hilfe einer Vorrichtung nach mindestens einem der vorangegangenen Anspräche, mit den Schritten,
- die Umgebungstemperatur zu messen,
- den Messpunkt (18) zu kühlen, so dass die Temperatur am Messpunkt (18) gegenüber der Umgebungstemperatur sinkt,
- dabei die Temperatur am Messpunkt (18) zu messen und nach Feststellung, dass bei fortgesetzter Kühlung die Temperatur am Messpunkt (18) im wesentlichen nicht weiter sinkt, aus der dann am Messpunkt (18) gemessenen Temperatur unter Berücksichtigung der gemessenen Umgebungstemperatur die Feuchte zu ermitteln und die Kühlung des Messpunktes (18) herunterzuregeln oder zu unterbrechen.

## Claims

1. An apparatus for determining the humidity of a gas at a measuring point (18) having
- an environmental temperature measuring device (14a, 14b) for measuring the environmental temperature,
- a cooling device (6) for cooling the measuring point (18) such that the temperature at the measuring point (18) decreases in relation to the environmental temperature,
- a measuring point temperature measuring device (16) for measuring the temperature at the measuring point (18), wherein the measuring point temperature measuring device (16) has a measuring point temperature measuring site (16),
- a substrate (4), on one surface of which the measuring point (18), the cooling device (6) and the measuring point temperature measuring device (16) are disposed together,
- an evaluating device (20) connected to the cooling device (6), the environmental temperature measuring device (14a, 14b) and the measuring point temperature measuring device (16), arranged to determine, after detecting that the temperature at the measuring point (18) substantially does not decrease further with continued cooling, the humidity from the temperature then measured at the measuring point (18), taking into account the measured environmental temperature, and
- **characterised by** a control device (28) arranged to adjust downward or switch off the cooling device (6) after detecting that the temperature at the measuring point (18) substantially does not decrease further with continued cooling.

2. The apparatus according to Claim 1,
**characterised in that** the cooling device (6) has at least one cooling portion (8) disposed at the measuring point (18) and at least one heat dissipating portion (10a, 10b) remote from the measuring point (18).

3. The apparatus according to Claim 2,
**characterised in that** the cooling device (6) has at least one Peltier element.

4. The apparatus according to at least one of the previous claims,
**characterised in that** there is stored in the evaluating device (20) a table (24), in which the humidity values are given against the environmental temperature and the temperature at the measuring point (18).

5. The apparatus according to at least one of the previous claims,
**characterised in that** the environmental temperature measuring device (14a, 14b) is disposed on the same surface of the substrate (4) as the measuring point (18), the cooling device (6) and the measuring point temperature measuring device (16).

6. The apparatus according to at least one of the previous claims,
**characterised in that** the substrate (4) is part of a chip or is configured as a chip.

7. A method for determining the humidity of a gas at a measuring point (18) with the aid of an apparatus according to at least one of the previous claims, having the steps of
- measuring the environmental temperature,
- cooling the measuring point (18) such that the temperature at the measuring point (18) decreases with respect to the environmental temperature,
- measuring thereby the temperature at the measuring point (18) and, after detecting that the temperature at the measuring point (18) does not substantially decrease further with continued cooling, determining the humidity from the temperature measured therein at the measuring point (18), taking into account the measured environmental temperature, and adjusting downward or interrupting the cooling of the measuring point (18).

## Revendications

1. Dispositif pour déterminer l'humidité d'un gaz à un point de mesure (18), avec
- un dispositif de mesure de la température ambiante (14a, 14b) servant à mesurer la température ambiante,
- un dispositif de refroidissement (6) servant à refroidir le point de mesure (18) de sorte que la température au point de mesure (18) diminue par rapport à la température ambiante,
- un dispositif de mesure de la température au point de mesure (16) servant à mesurer la température au point de mesure (18), le dispositif de mesure de la température au point de mesure (16) présentant un poste de mesure de la température au point de mesure (16),
- un substrat (4) sur une surface duquel sont disposés conjointement le point de mesure (18), le dispositif de refroidissement (6) et le dispositif de mesure de la température au point de mesure (16),
- un dispositif d'évaluation (20) raccordé au dispositif de refroidissement (6), au dispositif de mesure de la température ambiante (14a, 14b) et au dispositif de mesure de la température au point de mesure (16), installé pour déterminer l'humidité, après constatation que la poursuite du refroidissement ne permet pas de baisser sensiblement plus la température au point de mesure (18), à partir de la température alors mesurée au point de mesure (18) en tenant compte de la température ambiante mesurée, et
- **caractérisé par** un dispositif de commande (28) installé pour diminuer la puissance ou mettre hors circuit le dispositif de refroidissement (6), après constatation que la poursuite du refroidissement ne permet pas de baisser sensiblement plus la température au point de mesure (18).

2. Dispositif selon la revendication 1,
**caractérisé en ce que** le dispositif de refroidissement (6) présente au moins une section de refroidissement (8) disposée au niveau du point de mesure (18) et au moins une section de dissipation de chaleur (10a, 10b) éloignée du point de mesure (18).

3. Dispositif selon la revendication 2,
**caractérisé en ce que** le dispositif de refroidissement (6) présente au moins un élément Peltier.

4. Dispositif selon au moins l'une quelconque des revendications précédentes, **caractérisé en ce qu'**un tableau (24) est enregistré dans le dispositif d'évaluation (20), dans lequel sont indiquées les valeurs d'humidité en fonction de la température ambiante et de la température au point de mesure (18).

5. Dispositif selon au moins l'une quelconque des revendications précédentes, **caractérisé en ce que** le dispositif de mesure de la température ambiante (14a, 14b) est disposé sur la même surface du substrat (4) que le point de mesure (18), le dispositif de refroidissement (6) et le dispositif de mesure de la température au point de mesure (16).

6. Dispositif selon au moins l'une quelconque des revendications précédentes, **caractérisé en ce que** le substrat (4) fait partie d'une puce ou est réalisé sous forme de puce.

7. Procédé pour déterminer l'humidité d'un gaz à un point de mesure (18) à l'aide d'un dispositif selon au moins l'une quelconque des revendications précédentes, comprenant les étapes consistant à,
- mesurer la température ambiante,
- refroidir le point de mesure (18) de telle sorte que la température au point de mesure (18) baisse par rapport à la température ambiante,
- mesurer ce faisant la température au point de mesure (18) et, après constatation que la poursuite du refroidissement ne permet pas de baisser sensiblement plus la température au point de mesure (18), à partir de la température qui y est mesurée au point de mesure (18) en tenant compte de la température ambiante mesurée, déterminer l'humidité et diminuer la puissance ou interrompre le refroidissement du point de mesure (18).
